# EUROPÄISCHE PATENTSCHRIFT

(11) **EP 4 264 103 B1**
(45) Veröffentlichungstag und Bekanntmachung des Hinweises auf die Patenterteilung: **06.08.2025**
(21) Anmeldenummer: 21839396.5
(22) Anmeldetag: 13.12.2021
(51) Int. Cl.: F16L 21/04, F16L 21/08, F16L 21/02, F16L 25/14

(54) **ROHRVERBINDUNGSVORRICHTUNG MIT EINEM DICHTUNGSTRÄGER**
PIPE CONNECTION DEVICE WITH A SEAL SUPPORT
DISPOSITIF DE RACCORDEMENT DE TUYAU DOTÉ D'UN SUPPORT DE JOINT D'ÉTANCHÉITÉ

(30) Priorität: 15.12.2020 AT 510922020
(43) Veröffentlichungstag der Anmeldung: 25.10.2023
(73) Patentinhaber: E. Hawle Armaturenwerke GmbH, 4840 Vöcklabruck (AT)
(72) Erfinder: KAISER, Richard, 4863 Seewalchen a.A. (AT)
(74) Vertreter: Puchberger & Partner Patentanwälte
(86) Internationale Anmeldenummer: PCT/EP2021/085470
(87) Internationale Veröffentlichungsnummer: WO 2022/128906

(56) Entgegenhaltungen:
- WO-A1-2011/120669
- WO-A1-2015/177259
- DE-T2- 60 133 461

## Beschreibung

Die Erfindung betrifft eine Rohrverbindungsvorrichtung gemäß dem Oberbegriff des unabhängigen Patentanspruchs.

Gattungsgemäße Rohrverbindungsvorrichtungen sind in unterschiedlichen Ausführungsformen bekannt. Beispielsweise sind Rohrverbindungsvorrichtungen bekannt, die dazu geeignet sind, eine Rohrverbindung mit einem Rohrende herzustellen, wobei die Rohrverbindungsvorrichtung an Rohre mit unterschiedlichen Außendurchmessern anpassbar ist. Ein häufiger Anwendungsfall derartiger Rohrverbindungsvorrichtungen ist eine Reparaturarbeit, bei der ein Abschnitt einer Wasserleitung durch ein neues Rohrstück ersetzt werden soll. Oft sind zwar die Nenndurchmesser, also die Innendurchmesser, der Leitungen bekannt, nicht jedoch die Außendurchmesser, da die Außendurchmesser beispielsweise vom verwendeten Rohrmaterial abhängig sind. Um eine unkomplizierte und rasche Montage zu ermöglichen, sind gattungsgemäße Rohrverbindungsvorrichtungen dazu geeignet, eine Rohrverbindung mit unterschiedlichen Rohr-Außendurchmessern herzustellen.

Gattungsgemäße Rohverbindungsvorrichtungen sind beispielsweise den Druckschriften WO2011/120669A1, DE60133461T2 und WO2015/177259A1 beschrieben.

Insbesondere bei Wasserleitungen ist eine dauerhafte und sichere Abdichtung von großer Wichtigkeit. Zudem ist es wichtig, dass die Rohrverbindungsvorrichtung eine mechanisch stabile und auszugssichere Rohrverbindung herstellen kann. Beispielsweise treten bei Wasserleitungen übliche Drücke von mehr als 8 bar, teilweise sogar von mehr als 15 bar auf. Besonders bei Wasserleitungen mit großen Nenndurchmessern resultiert der Druck, aufgerechnet auf die große Querschnittsfläche, in hohen Auszugskräften. Zusätzlich können Auszugskräfte auch durch Bewegungen des Erdreichs bewirkt werden.

Zur Anpassung der Rohrverbindungsvorrichtung an unterschiedlichen Außendurchmesser der Rohre ist es bekannt, sogenannte Klemmringe einzusetzen. Diese sind aus einer Vielzahl an relativ zueinander beweglich angeordneten Gliedern zusammengesetzt, um den Innendurchmesser verstellen zu können. In der Praxis führt die Verwendung eines derartigen Klemmrings jedoch zu einem Zielkonflikt, da die Abdichtung und auch die ausreichende Zugsicherung eines Klemmrings erschwert sind.

Aufgabe der Erfindung ist es nun, eine Rohrverbindungsvorrichtung zu schaffen, die einen verstellbaren Innendurchmesser aufweist und dennoch eine dauerhaft dichte und auszugssichere Verbindung ermöglicht.

Die Aufgabe wird insbesondere durch die Merkmale des unabhängigen Patentanspruchs gelöst.

Insbesondere betrifft die Erfindung eine Rohrverbindungsvorrichtung zur Bildung einer dichtenden und auszugssicheren Rohrverbindung, umfassend:
- eine Muffe zur Aufnahme eines Rohrendes,
- einen Spannkörper, der insbesondere ringförmig ausgebildet ist,
- mindestens ein Spannmittel, insbesondere mehrere entlang des Spannkörpers verteilte Schrauben,
- einen aus mehreren relativ zueinander beweglich angeordneten Gliedern zusammengesetzten Klemmring mit einem verstellbaren Innendurchmesser,
- bevorzugt eine Dichtung zum Abdichten der Rohrverbindung,
- und bevorzugt mehrere über eine Führungsvorrichtung an den Gliedern entlang der Auszugsrichtung verschiebbar angeordnete Sicherungskeile zur Auszugssicherung des Rohrendes,
- wobei der Klemmring derart ausgestaltet ist, dass er durch Spannen bzw. Festziehen des Spannmittels zwischen der Muffe und dem Spannkörper eingeklemmt und Richtung Rohrende gepresst wird,
- wobei sich die Dichtung mit einem Muffenabschnitt ringförmig zwischen Muffe und Klemmring erstreckt, um diesen Bereich abzudichten.

Bevorzugt ist vorgesehen, dass zwischen der Dichtung und dem Klemmring ein ringförmig ausgebildeter Dichtungsträger vorgesehen ist.

Gegebenenfalls ist vorgesehen, dass die Dichtung zumindest entlang einer durchgehenden umlaufenden Linie, insbesondere entlang einer ringförmigen unterbrechungsfreien Fläche, an dem Dichtungsträger und/oder an der Muffe anliegt.

Gegebenenfalls ist vorgesehen, dass der Klemmring bei einer Änderung des Innendurchmessers gleitend am Dichtungsträger anliegt.

Gegebenenfalls ist vorgesehen, dass der Dichtungsträger in Radialrichtung, insbesondere formschlüssig, mit dem Spannkörper gekoppelt ist und bei einer Änderung des Innendurchmessers des Klemmrings gegenüber dem Spannkörper unbewegt bleibt.

Gegebenenfalls ist vorgesehen, dass die Lage des Muffenabschnitts der Dichtung und die Lage des Spannkörpers gegenüber dem Spannkörper bei einer Veränderung des Innendurchmessers des Klemmrings unverändert bleiben.

Gegebenenfalls ist vorgesehen, dass der Dichtungsträger und die Muffe über eine Freistellung und einen in Axialrichtung in die Freistellung ragenden Fortsatz formschlüssig miteinander gekoppelt sind.

Gegebenenfalls ist vorgesehen, dass der Fortsatz am Dichtungsträger vorgesehen ist und die Freistellung an der Muffe.

Gegebenenfalls ist vorgesehen, dass der Fortsatz ringförmig umlaufend ausgebildet ist und dass die Freistellung eine Ringnut ist.

Gegebenenfalls ist vorgesehen, dass die Dichtung zwischen dem Fortsatz und der Freistellung verläuft.

Gegebenenfalls ist vorgesehen, dass sich die Dichtung in den Bereich zwischen Fortsatz und Freistellung erstreckt.

Gegebenenfalls ist vorgesehen, dass die Dichtung den Bereich zwischen Fortsatz und Freistellung vollständig ausfüllt.

Gegebenenfalls ist vorgesehen, dass die Dichtung mit einem Rohrabschnitt an der Innenseite des Klemmrings angeordnet ist um, bei eingeführtem Rohrende, den Spalt zwischen Klemmring und Rohr abzudichten.

Gegebenenfalls ist vorgesehen, dass der Rohrabschnitt der Dichtung derart ausgestaltet ist, dass er zumindest entlang einer durchgehenden umlaufenden Linie, insbesondere entlang einer ringförmigen unterbrechungsfreien Fläche, dem Rohrende anliegt.

Gegebenenfalls ist vorgesehen, dass die Dichtung einen Verbindungsabschnitt umfasst, über den der Muffenabschnitt und der Rohrabschnitt der Dichtung dichtend miteinander verbunden sind.

Gegebenenfalls ist vorgesehen, dass der Verbindungsabschnitt, der Muffenabschnitt und der Rohrabschnitt der Dichtung einstückig ausgebildet sind.

Gegebenenfalls ist vorgesehen, dass der Verbindungsabschnitt der Dichtung derart ausgebildet ist, dass er eine Bewegung des Rohrabschnittes in axialer Richtung, insbesondere in Auszugsrichtung des Rohres, gegenüber dem Muffenabschnitt bei Aufrechterhaltung der Dichtwirkung ermöglicht.

Gegebenenfalls ist vorgesehen, dass der Verbindungsabschnitt als ringförmiger Faltenabschnitt ausgebildet ist.

Gegebenenfalls ist vorgesehen, dass der Dichtungsträger mehrteilig ausgebildet ist und mehrere Segmente umfasst, die zusammengesetzt eine glatte, im Wesentlichen durchgehende und Richtung Muffenabschnitt der Dichtung weisende Seite bilden.

Gegebenenfalls ist vorgesehen, dass der Klemmring mehrere an den Gliedern entlang der Auszugsrichtung verschiebbar angeordnete Sicherungskeile zur Auszugssicherung des Rohrendes umfasst.

Bevorzugt ist vorgesehen, dass mindestens einem Sicherungskeil ein Bremselement zugeordnet ist, das eine mit fortschreitendem Auszugsweg des Sicherungskeils steigende Gegenkraft gegen den Auszug des Sicherungskeils erzeugt.

Gegebenenfalls ist vorgesehen, dass mehreren oder allen Sicherungskeilen des Klemmrings je ein Bremselement zugeordnet ist.

Gegebenenfalls ist vorgesehen, dass die Sicherungskeile über die Führungsvorrichtungen, insbesondere linear, am Klemmring an den Gliedern geführt gelagert sind.

Gegebenenfalls ist vorgesehen, dass die Bremselemente als Bremskeile ausgebildet sind, die eine mit fortschreitendem Auszugsweg der Sicherungskeile steigende Klemmkraft erzeugen.

Gegebenenfalls ist vorgesehen, dass die Führungsvorrichtung eine Führungsschiene und eine die Führungsschiene umgreifende Führungsklammer umfasst.

Gegebenenfalls ist vorgesehen, dass das Bremselement im Verlauf der Führungsschiene und/oder im Verlauf der Führungsklammer positioniert ist.

Gegebenenfalls ist vorgesehen, dass die Führungsschiene an einem Glied des Klemmrings angeordnet ist, dass die Führungsklammer an dem zugeordneten Sicherungskeil angeordnet ist, und dass sich der Bremskeil entlang der Auszugsrichtung von der Führungsschiene schräg Richtung Sicherungskeil erhebt.

Gegebenenfalls ist vorgesehen, dass die Führungsschiene entlang des Auszugswegs schräg zur Axialrichtung in Richtung Rohrende bzw. Richtung Mitte verläuft,
Gegebenenfalls ist vorgesehen, dass sich der Bremskeil entlang des Auszugswegs schräg von der Führungsschiene in Richtung Rohrende bzw. Richtung Mitte erhebt.

Gegebenenfalls ist vorgesehen, dass die Führungsklammer als Klips wirkt und derart ausgestaltet ist, dass die Führungsklammer, durch elastisches Verformen, quer zum Verlauf der Führungsschiene auf die Führungsschiene aufklipsbar ist.

Gegebenenfalls ist vorgesehen, dass die Führungsvorrichtung einen ersten Abschnitt aufweist, in dem die Führungsvorrichtung eine im Wesentlichen freie Verschiebung des Sicherungskeils gegenüber dem Glied ermöglicht.

Gegebenenfalls ist vorgesehen, dass die Führungsvorrichtung einen zweiten Abschnitt aufweist, in dem das Bremselement dem Auszug des Sicherungskeils mit einer Gegenkraft entgegenwirkt.

Gegebenenfalls ist vorgesehen, dass der Sicherungskeil in seiner Grundstellung durch mindesten ein Halteelement gehalten wird, wobei die Halteelemente derart ausgestaltet sind, dass die Haltekraft aller Halteelemente eines Sicherungskeils kleiner ist als die auf den Sicherungskeil wirkende Auszugskraft.

Insbesondere ist vorgesehen, dass die Sicherungskeile entlang der Auszugsrichtung schräg zur Oberfläche des Rohrendes bzw. schräg zur Axialrichtung des Rohrendes bewegbar angeordnet sind.

Bevorzugt ist vorgesehen, dass der Dichtungsträger ringförmig und bevorzugt hohlkegelstumpfförmig ausgebildet ist, sodass der Dichtungsträger zwei kegelförmige bzw. kegelige Flächen aufweist, wobei eine zur Anlage der Dichtung und die andere zur Anlage am Klemmring eingerichtet ist.

Bevorzugt ist vorgesehen, dass der Spannkörper ringförmig ausgebildet ist und eine kegelförmige oder kegelige Fläche aufweist, die in montierter Stellung dem Klemmring zugewandt ist.

Bevorzugt ist vorgesehen, dass sich die Dichtung mit einem Muffenabschnitt ringförmig zwischen Muffe und Klemmring erstreckt, um diesen Bereich abzudichten,

Gegebenenfalls ist vorgesehen, dass der Dichtungsträger eine kegelige Fläche des Klemmrings komplett abdeckt. Gegebenenfalls ist vorgesehen, dass die Dichtung, insbesondere der Muffenabschnitt der Dichtung, eine Seite des Dichtungsträgers komplett abdeckt. Bevorzugt ist vorgesehen, dass die Dichtung dem Verlauf des Dichtungsträgers folgt. Insbesondere ist vorgesehen, dass die Dichtung dem Verlauf des Dichtungsträgers folgt und sich dabei um den Fortsatz des Dichtungsträgers herum erstreckt und dann weiter dem Verlauf des Dichtungsträgers folgt. Bevorzugt ist vorgesehen, dass sich die Dichtung in die Freistellung, insbesondere in die Ringnut der Muffe erstreckt.

Bevorzugt ist vorgesehen, dass die Dichtung zwischen Muffe und Dichtungsträger angeordnet ist, wobei der Dichtungsträger an keiner Stelle die Muffe berührt, sondern dass immer die Dichtung zwischen den beiden Komponenten verläuft.

Die Bremselemente sind bevorzugt derart ausgestaltet, dass sie bei fortschreitendem Auszugsweg der Sicherungskeile eine steigende Gegenkraft gegen den Auszug erzeugen. Dies bedeutet insbesondere, dass jene Kraft, die benötigt wird, um den Sicherungskeil zu bewegen, mit fortschreitendem Auszugsweg größer wird. Dies unabhängig davon, dass der Sicherungskeil mit fortschreitendem Auszugsweg immer stärker gegen das Rohrende gedrückt wird. Das Bremselement wirkt beispielsweise als Reibelement, bei dem die Reibung zwischen dem Sicherungskeil und dem Glied immer größer wird, je weiter der Sicherungskeil ausgezogen wird. Gegebenenfalls wird das Bremselement mit fortschreitendem Auszugsweg elastisch und/oder plastisch verformt.

Insbesondere sind die Bremselemente als Sicherungskeile ausgebildet, die eine steigende Klemmkraft zwischen Glied und Sicherungskeil bei fortschreitendem Auszugsweg erzeugen. Der Sicherungskeil ist über eine Führungsvorrichtung mit dem Glied des Klemmrings verbunden. Die Führungsvorrichtung umfasst bevorzugt eine Führungsschiene und eine die Führungsschiene umgreifende Führungsklammer. Im Verlauf der Führungsschiene und/oder der Führungsklammer ist ein Bremskeil vorgesehen, der sich derart erhebt, dass mit fortschreitendem Auszugsweg eine steigende Gegenkraft erzeugt wird. Insbesondere erhebt sich der Sicherungskeil schräg von der Führungsschiene. Bevorzugt ist der Sicherungskeil derart angeordnet, dass mit fortlaufendem Auszugsweg das Spiel der Führungsvorrichtung verkleinert wird bzw. eine festere Presspassung erzeugt wird. Bevorzugt erhebt sich der Bremskeil in Auszugsrichtung schräg von der Führungsschiene.

Bevorzugt ist das Bremselement derart ausgebildet, dass die Gegenkraft mit fortschreitendem Auszugsweg linear oder progressiv ansteigt.

Der Sicherungskeil ist bevorzugt anschlagsfrei, insbesondere einseitig anschlagsfrei, an den Gliedern des Klemmrings befestigt, sodass die Sicherungskeile gegebenenfalls nach Überwinden der Gegenkraft abgezogen werden können.

Zur Herstellung einer Rohrverbindung unter Verwendung der erfindungsgemäßen Rohrverbindungsvorrichtung kann beispielsweise wie folgt vorgegangen werden: Bevorzugt ist die Rohrverbindungsvorrichtung vormontiert, wobei der Klemmring zwischen dem Spannkörper und der Muffe angeordnet ist. Zwischen der Muffe und dem Klemmring ist ein Dichtungsträger vorgesehen. Zwischen dem Dichtungsträger und der Muffe ist eine Dichtung vorgesehen. Zudem verläuft die Dichtung an der Innenseite des Klemmrings. Der Klemmring bzw. die Spannmittel sind so weit geöffnet, dass der Innendurchmesser des Klemmrings größer ist, als der Außendurchmesser des Rohrendes. Dadurch kann das Rohrende in die Muffe und in den Klemmring eingeführt werden. Befindet sich das Rohrende in der gewünschten Stellung innerhalb der Muffe, so können die Spannmittel gespannt und festgezogen werden. Durch Festziehen der Spannmittel wird der Spannkörper gegen die Muffe gezogen und der Klemmring wird Richtung Rohrende gedrückt. Insbesondere werden die Spannmittel so lange festgezogen, bis der Klemmring mit ausreichender Kraft gegen das Rohrende gedrückt wird. In dieser Stellung liegt der Klemmring bevorzugt mit seinen Sicherungskeilen am Rohrende an. Zusätzlich ist zwischen dem Klemmring und dem Rohrende die Dichtung ringförmig eingeklemmt, um diesen Bereich abzudichten. Zudem erstreckt sich die Dichtung bevorzugt auch zwischen Muffe und Klemmring, insbesondere zwischen Muffe und Dichtungsträger, um auch diesen Bereich abzudichten.

Die Sicherungskeile sind bei der Montage bevorzugt in ihrer Grundstellung angeordnet und dadurch soweit wie möglich innerhalb der Glieder positioniert. In dieser Stellung werden die Sicherungskeile bevorzugt über Halteelemente gehalten.

Insbesondere bei einer derart hergestellten Rohrverbindung geschieht die Auszugssicherung folgendermaßen:
Wird das Rohrende durch Auszugskräfte aus der Muffe gezogen, so werden die Sicherungskeile 8 entlang der Auszugsrichtung mit dem Rohrende mitbewegt. Mit fortschreitendem Auszugsweg der Sicherungskeile werden die Sicherungskeile durch ihre keilförmige Ausgestaltung und die keilförmige Lagerung gegen das Rohrende gedrückt. Bevorzugt umfassen die Sicherungskeile an ihrer dem Rohrende zugewandten Seite Zacken bzw. Zähne, die sich gegebenenfalls in die Oberfläche des Rohrendes eindrücken, um die Verbindung zu verbessern. Bei weiter fortschreitendem Auszugsweg werden die Sicherungskeile von einem ersten Abschnitt in einen zweiten Abschnitt bewegt. In dem zweiten Abschnitt sind Bremselemente vorgesehen, die bei fortschreitendem Auszugsweg der Sicherungskeile eine steigende Gegenkraft gegen den Auszug der Sicherungskeile erzeugen. In einer bevorzugten Ausführungsform sind die Bremselemente als Bremskeile ausgebildet, die bei fortschreitendem Auszugsweg der Sicherungskeile eine steigende Klemmkraft erzeugen. Die Keile erheben sich bevorzugt entlang der Bewegungsrichtung der Sicherungskeile in einem Bereich der Führungsvorrichtung, womit die Reibung mit fortschreitendem Auszugsweg erhöht wird. Dadurch kann verhindert werden, dass die Sicherungskeile zu weit aus den Gliedern des Klemmrings gezogen werden, ohne jedoch einen harten Anschlag zu benötigen.

In weiterer Folge wird die Erfindung anhand von Figuren weiter beschrieben.
**Figur 1** zeigt eine schematische Schrägansicht einer möglichen Ausführungsform einer Rohrverbindungsvorrichtung.
**Figur 2** zeigt eine Schnittdarstellung einer Rohrverbindungsvorrichtung, insbesondere der Rohrverbindungsvorrichtung aus Figur 1, in ihrer montierten Stellung.
**Figur 3** zeigt eine schematische Schnittdarstellung eines Details im Bereich des Klemmrings.
Die **Figuren 4a und 4b** zeigen zwei Ansichten einer möglichen Ausgestaltung eines Sicherungskeils.
**Figur 5** zeigt eine seitliche Ansicht eines Glieds eines Klemmrings mit entferntem Sicherungskeil.
**Figur 6** zeigt eine Ansicht zweier zusammengesteckter Glieder eines Klemmrings.

Wenn nicht anders angegeben, so entsprechen die Bezugszeichen folgenden Komponenten: Muffe 1, Rohrende 2, Spannkörper 3, Spannmittel 4, Glied 5, Klemmring 6, Dichtung 7, Sicherungskeil 8, Muffenabschnitt (der Dichtung) 9, Dichtungsträger 10, Radialrichtung 11, Freistellung (zur Koppelung des Dichtungsträgers) 12, Axialrichtung 13, Fortsatz (zur Koppelung des Dichtungsträgers) 14, Rohrabschnitt (der Dichtung) 15, Verbindungsabschnitt (zur Verbindung der Dichtungsabschnitte) 16, Führungsvorrichtung 17, Bremselement 18, Bremskeil 19, Führungsschiene 20, Führungsklammer 21, erster Abschnitt (der Führungsvorrichtung) 22, zweiter Abschnitt (der Führungsvorrichtung) 23, Halteelement (für den Sicherungskeil in der Grundstellung) 24, Hinterschneidung 25 (der Führungsvorrichtung) Schlitz 26, Ringverbindungselement 27.

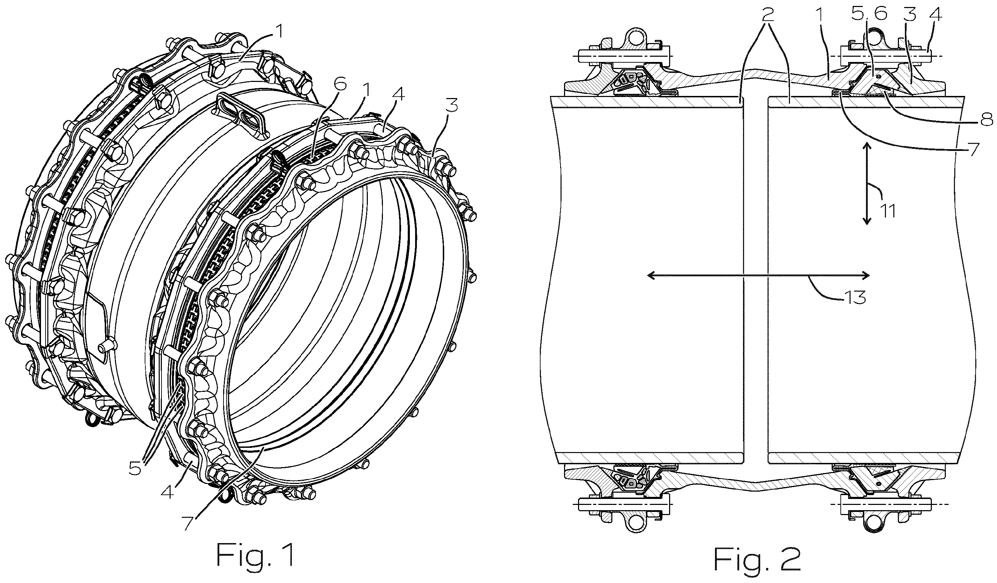

**Figur 1** zeigt eine Rohrverbindungsvorrichtung mit einer Muffe 1, die dazu eingerichtet ist, ein nicht dargestelltes Rohrende 2 aufzunehmen und insbesondere eine Verbindung mit dem Rohrende 2 herzustellen. In der vorliegenden Ausführungsform ist die Rohrverbindungsvorrichtung zur Koppelung zweier Rohrenden 2 eingerichtet. Grundsätzlich kann die Rohrverbindungsvorrichtung in allen Ausführungsformen derart ausgestaltet sein, dass an einer Seite der Rohrverbindungsvorrichtung ein Rohrende 2 angebracht werden kann. Auf der anderen Seite können beliebige Komponenten wie beispielsweise ein Flansch, ein Steigrohr, eine Rohrabzweigung oder, wie im vorliegenden Fall, eine zweite Muffe 1 zur Verbindung mit einem Rohrende 2 vorgesehen sein.

Die Rohrverbindungsvorrichtung umfasst einen Spannkörper 3, der, wie in der vorliegenden Ausführungsform, bevorzugt ringförmig ausgebildet ist. Zwischen der Muffe 1, insbesondere einem ringförmigen Abschnitt der Muffe 1, und dem Spannkörper 3 ist ein Klemmring 6 vorgesehen. Der Klemmring 6 ist aus mehreren Gliedern 5 zusammengesetzt und weist einen einstellbaren Innendurchmesser auf. Der Klemmring 6 kann durch Festziehen der Spannmittel 4 verstellt werden. Die Spannmittel 4 sind in der vorliegenden Ausführungsform als Schrauben ausgebildet, durch die der Spannkörper 3 Richtung Muffe 1 gezogen werden kann. Sowohl die Muffe 1 als auch der Spannkörper 3 haben bevorzugt in allen Ausführungsformen eine schräg verlaufende und/oder kegelige Fläche, die Richtung Klemmring 6 und Richtung Rohrende 2 weist. Der Klemmring 6 hat an seinen der Muffe 1 und dem Spannkörper 3 zugewandten Flächen ebenfalls kegelige bzw. schrägverlaufende Außenflächen, wobei die Breite des Klemmrings 6 bzw. dessen Glieder 5, entlang der Axialrichtung 13 gemessen, nach außen hin abnimmt.

Zur Herstellung einer dichtenden Verbindung umfasst die Rohrverbindungsvorrichtung eine Dichtung 7. Zur Verbesserung der Auszugsicherheit umfasst die Rohrverbindungsvorrichtung wiederum bevorzugt mehrere Sicherungskeile 8.

**Figur 2** zeigt eine Schnittdarstellung, insbesondere eine Schnittdarstellung der Rohrverbindungsvorrichtung aus Figur 1, in einer montierten Stellung, in der zwei Rohrenden 2 über die Verbindungsvorrichtung miteinander verbunden sind. Wie beschrieben, handelt es sich hierbei um eine mögliche Ausführungsform, wobei andere möglichen Ausführungsformen nur einen Klemmring 6 zur Verbindung mit einem Rohrende 2 umfassen können.

Die Rohrverbindungsvorrichtung umfasst eine Muffe 1, einen Spannkörper 3 und einen zwischen Muffe 1 und Spannkörper 3 eingeklemmten Klemmring 6. Der Klemmring 6 bzw. dessen Glieder 5 sind bevorzugt derart ausgestaltet, dass durch Festziehen mindestens eines Spannmittels 4 der Spannkörper 3 Richtung Muffe 1 gespannt wird, und der Klemmring 6 dadurch in Radialrichtung 11 Richtung Rohrende 2 gedrückt wird. Dies geschieht insbesondere über mindestens eine kegelige Fläche. In der vorliegenden Ausführungsform weist sowohl die Muffe 1 als auch der Spannkörper 3 jeweils eine schräggestellte bzw. kegelige Fläche auf, die Richtung Klemmring 6 und Rohrende 2 gerichtet ist. Zur Abdichtung umfasst die Rohrverbindungsvorrichtung eine Dichtung 7. Zur Verbesserung der Auszugssicherheit umfasst die Rohrverbindungsvorrichtung bevorzugt mehrere Sicherungskeile 8.

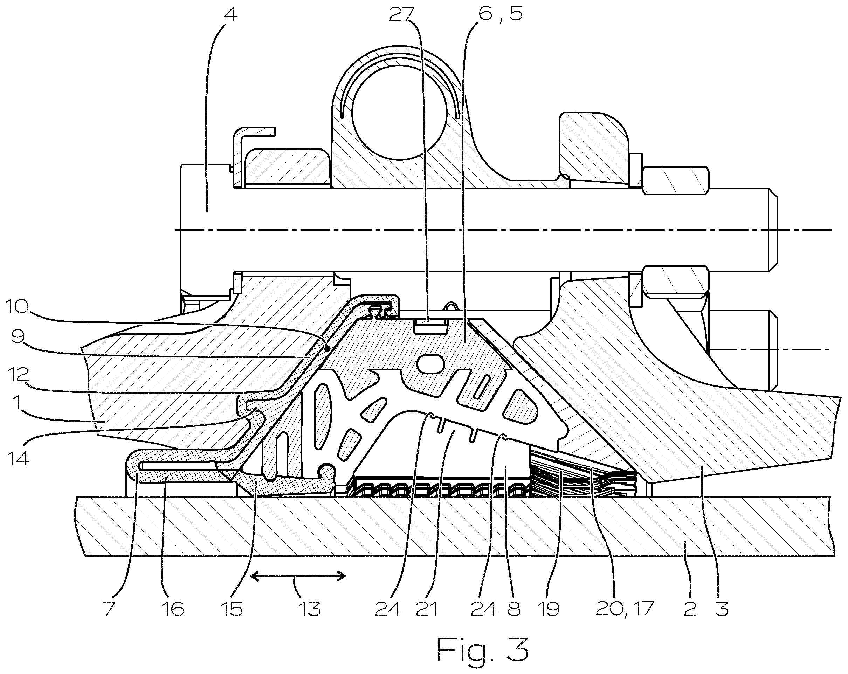

**Figur 3** zeigt ein Detail einer Schnittdarstellung einer Rohrverbindungsvorrichtung, insbesondere der Rohrverbindungsvorrichtung aus Figur 2 und/oder Figur 1.

Die Rohrverbindungsvorrichtung umfasst eine Muffe 1, einen Spannkörper 3 sowie einen zwischen Spannkörper 3 und Muffe 1 angeordneten Klemmring 6. Der Klemmring 6 ist aus mehreren relativ zueinander bewegbaren Gliedern 5 zusammengesetzt und hat dadurch einen variablen bzw. einen einstellbaren Innendurchmesser. Der Spannkörper 3 kann über mindestens ein Spannmittel 4 Richtung Muffe 1 gespannt werden. Dadurch wird der Klemmring 6 Richtung Rohrende 2 gedrückt. In der vorliegenden Ausführungsform umfasst sowohl die Muffe 1 als auch der Spannkörper 3 eine schräge, Richtung Rohrende 2 geneigte Fläche, die bevorzugt jeweils schräg bzw. kegelförmig ausgebildet ist. Der Klemmring 6 weist bevorzugt ebenfalls schräge bzw. kegelige Flächen auf, die jeweils bevorzugt im Wesentlichen parallel zu den schrägen Flächen der Muffe 1 und des Spannkörpers 3 verlaufen. Insbesondere ist der Klemmring 6 derart ausgebildet, dass sich dessen Erstreckung in Axialrichtung 13 gemessen nach außen hin verkleinert und dadurch nach außen in Radialrichtung 11 zusammenlaufend ausgebildet ist.

Zur Herstellung einer Abdichtung ist eine Dichtung 7 vorgesehen. Die Dichtung 7 ist dazu eingerichtet, ein Austreten des im Rohr befindlichen Mediums zu verhindern.

Bei der vorliegenden Konfiguration der Rohrverbindungsvorrichtung muss insbesondere der Spalt zwischen dem Klemmring 6 und dem Rohrende 2 abgedichtet werden. Hierzu umfasst die Dichtung 7 einen Rohrabschnitt 15, der zwischen dem Klemmring 6 und dem Rohrende 2 verläuft und bei hergestellter Rohrverbindung eingeklemmt ist. Ist kein Rohrende 2 in die Rohrverbindungsvorrichtung eingesetzt, so verläuft der Rohrabschnitt 15 der Dichtung 7 bevorzug ringförmig entlang der Innenseite des Klemmrings 6. Wird der Klemmring 6 Richtung Rohrende 2 gepresst, so wird auch die Dichtung 7, insbesondere deren Rohrabschnitt 15, zwischen dem Klemmring 6 und dem Rohrende 2 eingeklemmt, wodurch eine Abdichtung bewirkt wird. Bevorzugt liegt die Dichtung mit ihrem Rohrabschnitt 15 in dieser Stellung entlang einer geschlossenen, kreisförmigen Kontur am Rohrende 2 an.

Zur Abdichtung des Bereichs zwischen Muffe 1 und Klemmring 6 weist die Dichtung 7 einen Muffenabschnitt 9 auf, der zwischen Muffe 1 und Klemmring 6 verläuft. Der Muffenabschnitt 9 der Dichtung 7 ist in montierter Stellung bevorzugt zwischen dem Klemmring 6 und der Muffe 1 eingeklemmt. Zur Verbesserung der Dichtwirkung ist zwischen der Dichtung 7, insbesondere zwischen dem Muffenabschnitt 9 der Dichtung 7, und dem Klemmring 6 ein Dichtungsträger 10 vorgesehen.

Der Dichtungsträger 10 ist in der vorliegenden Ausführungsform ringförmig ausgebildet. Gegebenenfalls ist der Dichtungsträger 10 ein einstückiger Ring. Gegebenenfalls ist der Dichtungsträger 10 ein aus mehreren Segmenten zusammengesetzter Ring. Bevorzugt weist der Dichtungsträger 10 in allen Ausführungsformen eine im Wesentlichen glatte Richtung Dichtung 7 weisende Außenfläche auf, die im Falle eines zusammengesetzten Dichtungsträgers 10 Stoßstellen aufweist. Die Stoßstellen sind bevorzugt so glatt wie möglich und überlappend ausgebildet. Durch diese glatte Ausgestaltung einer ringförmigen Fläche kann eine im Wesentlichen geschlossene, insbesondere glatte Anlagefläche für die Dichtung 7 bzw. deren Muffenabschnitt 9 gebildet werden.

In der vorliegenden Ausführungsform ist der Dichtungsträger 10 in Axialrichtung 13 mit der Muffe 1 gekoppelt. Dies bedeutet, dass, wenn der Klemmring 6 Richtung Rohrende 2 bewegt wird, der Dichtungsträger 10 seine Lage in Radialrichtung 11 gegenüber der Muffe 1 nicht verändert. Der Dichtungsträger 10 bleibt somit bei einer Bewegung des Klemmrings 6 gegenüber der Muffe 1 unbewegt. Dadurch kann die Dichtwirkung aufrechterhalten werden, selbst wenn sich der Klemmring 6 bzw. dessen Glieder 5 beim Spannen bzw. Festziehen bewegen. Insbesondere bleibt durch die Kopplung des Dichtungsträgers 10 mit der Muffe 1 bei einer Bewegung des Klemmrings 6 auch die Dichtung 7 gegenüber der Muffe 1 unbewegt. Dadurch kann ein im Wesentlichen fester Verbund der, zwischen der Muffe 1 und dem Dichtungsträger 10 eingeklemmten, Dichtung 7 bei bewegtem Klemmring 6 gebildet werden.

Zur Kopplung des Dichtungsträgers 10 mit der Muffe 1 sind in der vorliegenden Ausführungsform ein Fortsatz 14 und eine Freistellung 12 vorgesehen. Der Fortsatz 14 greift in die Freistellung 12 ein, um eine formschlüssige Kopplung in Axialrichtung 13 herstellen zu können. Grundsätzlich kann jede herkömmliche Vorrichtung zur Kopplung des Dichtungsträgers 10 mit der Muffe 1 eingesetzt werden. In der vorliegenden Ausführungsform umfasst der Dichtungsträger 10 einen Fortsatz 14, der in eine Freistellung 12 der Muffe 1 ragt. Insbesondere ist die Freistellung 12 als Ringnut ausgebildet und der Fortsatz 14 als ringförmiger Fortsatz, der in die Ringnut eingreift.

In der vorliegenden Ausführungsform erstreckt sich die Dichtung 7, insbesondere deren Muffenabschnitt 9, auch in den Bereich zwischen Fortsatz 14 und Freistellung 12. Besonders bei einer ringförmigen Ausbildung der Freistellung 12 und des Fortsatzes 14 wird die Dichtung 7 in diesem Bereich ringförmig gequetscht, womit die Dichtwirkung verbessert sein kann.

Bevorzugt erstreckt sich die Dichtung 7 mit ihrem Muffenabschnitt 9 über die gesamte Richtung Muffe 1 weisende Außenfläche des Dichtungsträgers 10. Es entspricht jedoch auch dem Erfindungsgedanken, dass der Muffenabschnitt 9 der Dichtung 7 nur entlang eines ringförmigen Abschnitts des Dichtungsträgers 10 verläuft.

Zur Verbesserung der Dichtwirkung der Dichtung 7 sind der Muffenabschnitt 9 und der Rohrabschnitt 15 der Dichtung 7 dichtend miteinander verbunden. Hierzu ist ein Verbindungsabschnitt 16 der Dichtung 7 vorgesehen. Der Verbindungsabschnitt 16 verbindet den Rohrabschnitt 15 und den Muffenabschnitt 9 der Dichtung 7 derart, dass in diesem Bereich kein Medium austreten kann.

Bei einer Anpassung des Innendurchmessers des Klemmrings 6 kommt es in der Regel auch zu einer Verlagerung des Rohrabschnitts 15 der Dichtung 7. Um die Dichtwirkung hierbei aufrechterhalten zu können, ist der Verbindungsabschnitt 16 der Dichtung 7 derart ausgestaltet, dass er eine Relativbewegung des Rohrabschnitts 15 gegenüber dem Muffenabschnitt 9 bei Aufrechterhaltung der Dichtwirkung ermöglicht. In der vorliegenden Ausführungsform ist der Verbindungsabschnitt 16 als ringförmige Falte ausgebildet. Die Falte dient als eine Art Materialreservoir zum Ausgleich der Relativbewegung des Rohrabschnitts 15 gegenüber dem Muffenabschnitt 9. Insbesondere sind zwei im Wesentlichen parallel verlaufende ringförmige Abschnitte der Dichtung 7 im Außenbereich miteinander dichtend verbunden und an ihren anderen Enden jeweils mit dem Muffenabschnitt 9 bzw. mit dem Rohrabschnitt 15 verbunden. Der Verbindungsabschnitt 16 ist dadurch flexibel ausgebildet. Alternativ kann für kleinere Relativbewegungen auch ein elastisch verformbarer oder dehnbarer Verbindungsabschnitt 16 vorgesehen sein.

Zur Verbesserung der Auszugssicherheit umfasst die Rohrverbindungsvorrichtung bevorzugt mehrere Sicherungskeile 8. Diese Sicherungskeile 8 sind an den Gliedern 5 des Klemmrings 6 angebracht. Kommt es zu einer Auszugskraft des Rohrendes 2 bzw. zu einer Auszugsbewegung, die in der vorliegenden Darstellung von links nach rechts erfolgt, so helfen die Sicherungskeile 8 dabei, die Auszugssicherheit zu verbessern.

In allen Ausführungsformen ist bevorzugt vorgesehen, dass der Klemmring 6 über die Sicherungskeile 8 am Rohrende 2 abgestützt ist. Bevorzugt liegt der Klemmring 6 in allen Ausführungsformen ausschließlich mit seinen Sicherungskeilen 8 am Rohrende 2 an. Zusätzlich liegt auch die Dichtung 7 an dem Rohrende 2 an, um eine Abdichtung herzustellen.

Bevorzugt weisen die Sicherungkeile 8 in allen Ausführungsformen Zähne auf, die die Verbindung zwischen Sicherungskeil 8 und Rohrende 2 verbessern.

Die Sicherungskeile 8 sind in Auszugsrichtung, insbesondere in Axialrichtung 13, verschieblich an den Gliedern 5 des Klemmrings 6 angebracht. Als in Axialrichtung 13 beweglich gelten die Sicherungskeile 8 auch dann, wenn sie schräg zur Axialrichtung 13 bewegt werden, da sie dennoch zumindest eine Komponente ihrer Bewegung in Axialrichtung 13 haben.

Um eine Verschiebung der Sicherungskeile 8 aus ihrer Grundstellung vor dem Verbinden mit dem Rohrende 2 zu vermeiden, sind die Sicherungskeile 8, wie in der Darstellung der Figur 3 zu sehen, in ihrer Grundstellung gehalten. Insbesondere sind Halteelemente 24 vorgesehen, die die Sicherungskeile 8 in ihrer Grundstellung an den Gliedern 5 halten. Diese Halteelemente 24 sind jedoch derart ausgebildet, dass sie eine Bewegung der Sicherungskeile 8 gegenüber den Gliedern 5 zulassen, wenn eine gewisse Haltekraft überwunden wird. Diese Haltekraft ist so klein, dass die Wirkung der Sicherungskeile 8 nicht beeinträchtigt wird.

Grundsätzlich sind die Sicherungskeile 8 geführt an den Gliedern 5 gelagert, womit sie gegebenenfalls von dem Klemmring 6 abgezogen werden können. In der vorliegenden Ausführungsform sind Bremselemente 18 vorgesehen, die mit fortschreitendem Auszugsweg der Sicherungskeile 8 eine steigende Gegenkraft gegen den Auszug erzeugen. Wird das Rohrende 2 durch eine Auszugskraft bewegt, so folgen die Sicherungskeile 8 der Bewegung des Rohrendes 2. Durch die keilförmige Ausgestaltung werden sie hierbei jedoch Richtung Rohrende 2 gedrückt und vergrößern dadurch die Haltekraft gegenüber dem Rohrende 2. Um zu verhindern, dass die Sicherungskeile 8 bei einer zu großen Relativbewegung von den Gliedern 5 abgezogen werden, sind Bremselemente 18 vorgesehen. Insbesondere im Zusammenspiel mit einer Vielzahl an durch Bremselemente 18 gebremsten Sicherungskeilen 8, kann verhindert werden, dass die Sicherungskeile 8 von den Gliedern 5 abgezogen werden, ohne hierfür jedoch einen formschlüssigen, harten Anschlag zu benötigen, der bei hohen Auszugskräften eine Schwachstelle darstellt. Vielmehr werden die Sicherungskeile 8 mit einer stetig oder progressiv ansteigenden Bremskraft gebremst.

Grundsätzlich gibt es unterschiedliche Möglichkeiten, ein derart wirkendendes Bremselement 18 umzusetzen. In der vorliegenden Ausführungsform sind die Bremselemente 18 als Bremskeile 19 ausgebildet. Durch die Bremskeile 19 wird die Reibkraft zwischen den Gliedern 5 und den Sicherungskeilen 8 bei fortschreitendem Auszug vergrößert, womit auch die Gegenkraft gegen den Auszug vergrößert wird.

Alternativ können die Bremselemente 18 Elemente sein, die sich bei einer Auszugsbewegung der Sicherungskeile 8 elastisch oder plastisch verformen.

Zur Verbindung und/oder Führung eines Sicherungskeils 8 mit einem Glied 5 ist eine Führungsvorrichtung 17 vorgesehen. Die Führungsvorrichtung 17 ist bevorzugt dazu eingerichtet, eine geführte Lagerung des Sicherungskeils 8 an einem Glied 5 entlang eines Freiheitsgrades herzustellen. Die Führungsvorrichtung 17 umfasst bevorzugt eine Führungsschiene 20 und eine Führungsklammer 21. Die Führungsklammer 21 umgreift die Führungsschiene 20, um eine im Wesentlichen lineare Führung bzw. eine Führung entlang eines Freiheitsgrads zu ermöglichen. In der vorliegenden Ausführungsform ist die Führungsschiene 20 am Glied 5 angeordnet und die Führungsklammer 21 am Sicherungskeil 8. Grundsätzlich wäre jedoch auch eine kinematische Umkehrung denkbar.

In der vorliegenden Ausführungsform sind die Bremskeile 19 derart angeordnet, dass neben der Erhöhung der Reibkräfte auch eine Vergrößerung der Steigung der Führungsschiene 20 bewirkt ist.

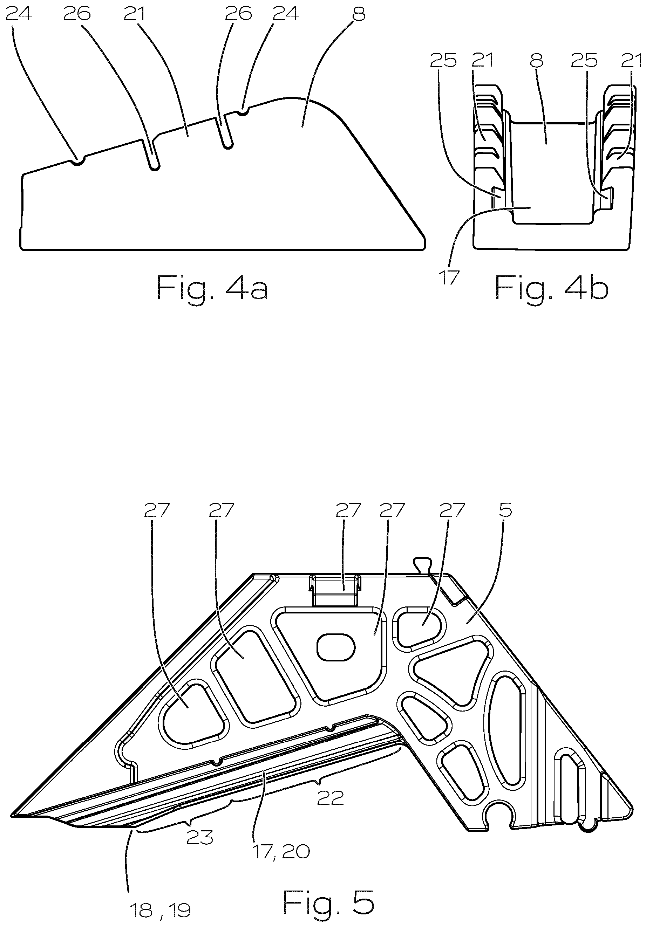

Die **Figuren 4a** und **4b** zeigen zwei Ansichten eines Sicherungskeils 8, insbesondere des Sicherungskeils 8 aus den Figuren 1, 2 und/oder 3. Der Sicherungskeil 8 umfasst in dieser Ausführungsform die Führungsklammer 21, die dazu eingerichtet bzw. geeignet ist, die nicht dargestellte Führungsschiene 20 des Glieds 5 zu umgreifen und dadurch eine Verschiebbarkeit bzw. eine Führung zu bewirken. Insbesondere ist vorgesehen, dass die Führungsklammer 21 Einlaufschrägen aufweist bzw. derart elastisch ausgebildet ist, dass die Führungsklammer 21 und/oder der Sicherungskeil 8 auf die Führungsschiene 20 aufgeklipst werden können.

Gegebenenfalls kann die Führungsklammer 21 mindestens einen Schlitz 26 oder, wie in der vorliegenden Ausführungsform, zwei Schlitze 26 umfassen, sodass die Steifigkeit herabgesetzt wird und das Aufklipsen erleichtert ist.

Insbesondere weist die Führungsklammer 21 mindestens eine Hinterschneidung 25 auf, in der die Führungsschiene 20 geführt ist, sodass ein einfaches Abziehen der Sicherungskeile 8 in Radialrichtung 11 verhindert wird. Ein Aufstecken durch Überwinden einer Kraft beim Aufklipsen in Radialrichtung 11 kann durch die vorliegende Ausgestaltung jedoch ermöglicht sein.

**Figur 5** zeigt eine schematische Ansicht eines Glieds 5 eines Klemmrings 6, jedoch ohne Sicherungskeil 8. Gegebenenfalls kann das Glied 5 gemäß Figur 5 in den Rohrverbindungsvorrichtungen gemäß den Figuren 1, 2 und/oder 3 eingesetzt werden. Das Glied 5 umfasst eine Führungsschiene 20. Diese Führungsschiene 20 ist dazu eingerichtet, in die Führungsklammer 21 einzugreifen und insbesondere mit seitlichen Elementen in die Hinterschneidung 25 der Führungsklammer 21 einzugreifen. Die Führungsvorrichtung umfasst ein Bremselement 18, das in dieser Ausführungsform insbesondere als Bremskeil 19 ausgebildet ist. Der nicht dargestellte Sicherungskeil 8 befindet sich in seiner Grundstellung in einem ersten Abschnitt 22. In diesem ersten Abschnitt 22 kann sich der Sicherungskeil 8 im Wesentlichen frei entlang der Führungsschiene 20 bewegen, ohne dass das Bremselement 18 eine Gegenkraft auf den Sicherungskeil 8 ausübt. In einem zweiten Abschnitt 23 hingegen ist das Bremselement 18 angeordnet. Bewegt sich der Sicherungskeil 8 aus seiner Grundstellung in den zweiten Abschnitt 23, so erzeugt das Bremselement 18 eine Gegenkraft gegen die Auszugsbewegung, die in der vorliegenden Darstellung von rechts nach links verläuft.

In allen Ausführungsformen verläuft die Bewegungsrichtung der Sicherungskeile 8, insbesondere der Freiheitsgrad der Führungsvorrichtung 17 und/oder die Führungsschiene 20 bevorzugt entlang der Auszugsrichtung schräg Richtung Rohrende 2.

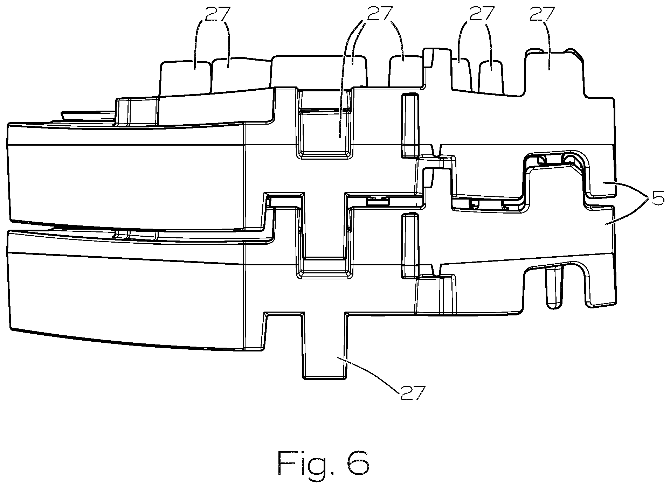

**Figur 6** zeigt eine schematische Ansicht zweier zusammengesetzter Glieder 5, die insbesondere Glieder 5 der Figuren 1, 2, 3 und/oder 5 sein können. Figur 6 zeigt zwei zusammengesteckte Glieder 5, die einen Abschnitt eines Klemmrings 6 bilden. Zur Verbindung der Glieder 5 miteinander sind Ringverbindungselemente 27 vorgesehen. Diese lassen eine Relativbewegung der Glieder 5 gegenüber einander zu, um einen Klemmring 6 mit einem variablen bzw. einstellbaren Innendurchmesser bilden zu können.

Insbesondere weisen die Glieder 5 durch die Ringverbindungselemente 27 in Umfangsrichtung eine gewisse Beweglichkeit gegenüber einander auf. In der vorliegenden Ausführungsform sind beispielsweise Fortsätze und Öffnungen vorgesehen, die Ringverbindungselemente 27 bilden und eine Beweglichkeit der Glieder 5 gegenüber einander in Umfangsrichtung erlauben. In Axialrichtung 13 und in Radialrichtung 11 hingegen kommt es durch die Vielzahl an Ringverbindungselementen 27 zu einer formschlüssigen, gegebenenfalls spielbehafteten, Verbindung oder Kopplung. Insbesondere können Ringverbindungselemente 27 auch klipsförmig ausgebildet sein, wie beispielsweise im Außenbereich des Klemmrings 6, sodass der Klemmring 6 kettenförmig aneinander gereihte Glieder 5 umfasst, die jedoch nicht selbsttätig voneinander getrennt werden können.

## Patentansprüche

1. Rohrverbindungsvorrichtung zur Bildung einer dichtenden und auszugssicheren Rohrverbindung, umfassend:
- eine Muffe (1) zur Aufnahme eines Rohrendes (2),
- einen Spannkörper (3), der insbesondere ringförmig ausgebildet ist,
- mindestens ein Spannmittel (4), insbesondere mehrere entlang des Spannkörpers (3) verteilte Schrauben,
- einen aus mehreren relativ zueinander beweglich angeordneten Gliedern (5) zusammengesetzten Klemmring (6) mit einem verstellbaren Innendurchmesser,
- eine Dichtung (7) zum Abdichten der Rohrverbindung,
- und gegebenenfalls mehrere über eine Führungsvorrichtung (17) an den Gliedern (5) entlang der Auszugsrichtung verschiebbar angeordnete Sicherungskeile (8) zur Auszugssicherung des Rohrendes (2),
- wobei der Klemmring (6) derart ausgestaltet ist, dass er durch Spannen bzw. Festziehen des Spannmittels (4) zwischen der Muffe (1) und dem Spannkörper (3) eingeklemmt und Richtung Rohrende (2) gepresst wird,
- wobei sich die Dichtung (7) mit einem Muffenabschnitt (9) ringförmig zwischen Muffe (1) und Klemmring (6) erstreckt, um diesen Bereich abzudichten, **dadurch gekennzeichnet,**
- **dass** zwischen der Dichtung (7) und dem Klemmring (6) ein ringförmig ausgebildeter Dichtungsträger (10) vorgesehen ist.

2. Rohrverbindungsvorrichtung nach Anspruch 1, **dadurch gekennzeichnet, dass** die Dichtung (7) zumindest entlang einer durchgehenden umlaufenden Linie, insbesondere entlang einer ringförmigen unterbrechungsfreien Fläche, an dem Dichtungsträger (10) und/oder an der Muffe (1) anliegt.

3. Rohrverbindungsvorrichtung nach Anspruch 1 oder 2, **dadurch gekennzeichnet, dass** der Klemmring (6) bei einer Änderung des Innendurchmessers gleitend am Dichtungsträger (10) anliegt.

4. Rohrverbindungsvorrichtung nach einem der Ansprüche 1 bis 3, **dadurch gekennzeichnet,**
- **dass** der Dichtungsträger (10) in Radialrichtung (11), insbesondere formschlüssig, mit dem Spannkörper (3) gekoppelt ist und bei einer Änderung des Innendurchmessers des Klemmrings (6) gegenüber dem Spannkörper (3) unbewegt bleibt.

5. Rohrverbindungsvorrichtung nach einem der Ansprüche 1 bis 4, **dadurch gekennzeichnet, dass** die Lage des Muffenabschnitts (9) der Dichtung und die Lage des Spannkörpers (3) gegenüber dem Spannkörper (3) bei einer Veränderung des Innendurchmessers des Klemmrings (6) unverändert bleiben.

6. Rohrverbindungsvorrichtung nach einem der Ansprüche 1 bis 5, **dadurch gekennzeichnet,**
- **dass** der Dichtungsträger (10) und die Muffe (1) über eine Freistellung (12) und einen in Axialrichtung (13) in die Freistellung (12) ragenden Fortsatz (14) formschlüssig miteinander gekoppelt sind,
- insbesondere dass der Fortsatz (14) am Dichtungsträger (10) vorgesehen ist und die Freistellung (12) an der Muffe (1).

7. Rohrverbindungsvorrichtung nach Anspruch 6, **dadurch gekennzeichnet,**
- **dass** der Fortsatz (14) ringförmig umlaufend ausgebildet ist,
- und **dass** die Freistellung (12) eine Ringnut ist.

8. Rohrverbindungsvorrichtung nach Anspruch 6 oder 7, **dadurch gekennzeichnet,**
- **dass** die Dichtung (7) zwischen dem Fortsatz (14) und der Freistellung (12) verläuft
- und/oder dass sich die Dichtung (7) in den Bereich zwischen Fortsatz (14) und Freistellung (12) erstreckt,
- und/oder dass die Dichtung (7) den Bereich zwischen Fortsatz (14) und Freistellung (12) vollständig ausfüllt.

9. Rohrverbindungsvorrichtung nach einem der Ansprüche 1 bis 8, **dadurch gekennzeichnet, dass** die Dichtung (7) mit einem Rohrabschnitt (15) an der Innenseite des Klemmrings (6) angeordnet ist um, bei eingeführtem Rohrende (2), den Spalt zwischen Klemmring (6) und Rohr abzudichten.

10. Rohrverbindungsvorrichtung nach Anspruch 9, **dadurch gekennzeichnet, dass** der Rohrabschnitt (15) der Dichtung derart ausgestaltet ist, dass er zumindest entlang einer durchgehenden umlaufenden Linie, insbesondere entlang einer ringförmigen unterbrechungsfreien Fläche, dem Rohrende (2) anliegt.

11. Rohrverbindungsvorrichtung nach Anspruch 9 oder 10, **dadurch gekennzeichnet, dass** die Dichtung (7) einen Verbindungsabschnitt (16) umfasst, über den der Muffenabschnitt (9) und der Rohrabschnitt (15) der Dichtung dichtend miteinander verbunden sind,
- insbesondere dass der Verbindungsabschnitt (16), der Muffenabschnitt (9) und der Rohrabschnitt (15) der Dichtung einstückig ausgebildet sind.

12. Rohrverbindungsvorrichtung nach Anspruch 11, **dadurch gekennzeichnet,**
- **dass** der Verbindungsabschnitt (16) der Dichtung (7) derart ausgebildet ist, dass er eine Bewegung des Rohrabschnittes (15) in axialer Richtung, insbesondere in Auszugsrichtung des Rohres, gegenüber dem Muffenabschnitt (9) bei Aufrechterhaltung der Dichtwirkung ermöglicht,
- und/oder dass der Verbindungsabschnitt (16) als ringförmiger Faltenabschnitt ausgebildet ist.

13. Rohrverbindungsvorrichtung nach einem der Ansprüche 1 bis 12, **dadurch gekennzeichnet, dass** der Dichtungsträger (10) mehrteilig ausgebildet ist und mehrere Segmente umfasst, die zusammengesetzt eine glatte, im Wesentlichen durchgehende und Richtung Muffenabschnitt (9) der Dichtung weisende Seite bilden.

14. Rohrverbindungsvorrichtung nach einem der Ansprüche 1 bis 13, **dadurch gekennzeichnet, dass** der Klemmring (6) mehrere an den Gliedern (5) entlang der Auszugsrichtung verschiebbar angeordnete Sicherungskeile (8) zur Auszugssicherung des Rohrendes (2) umfasst.

## Claims

1. A pipe connection device for forming a sealing and extraction-proof pipe connection, comprising:
- a sleeve (1) for receiving a pipe end (2),
- a tensioning body (3), which is in particular annular,
- at least one tensioning means (4), in particular several screws distributed along the tensioning body (3),
- a clamping ring (6) with an adjustable inner diameter composed of several links (5) which are arranged so as to be movable relative to one another,
- a seal (7) for sealing the pipe connection,
- and, optionally, several securing wedges (8) arranged on the links (5) so as to be displaceable along the direction of extraction via a guiding device (17) for securing the pipe end (2) against extraction,
- wherein the clamping ring (6) is designed in such a way that it is pressed between the sleeve (1) and the clamping body (3) and pressed in the direction of the pipe end (2) by tensioning and/or tightening the tensioning means (4),
- wherein the seal (7) with a sleeve portion (9) extends annularly between the sleeve (1) and the clamping ring (6) to seal this region,
**characterised**
- **in that** an annular seal carrier (10) is provided between the seal (7) and the clamping ring (6).

2. The pipe connection device according to claim 1, **characterised in that** the seal (7) abuts the seal carrier (10) and/or the sleeve (1) at least along a continuous circumferential line, in particular along an annular uninterrupted surface.

3. The pipe connection device according to claim 1 or 2, **characterised in that** the clamping ring (6) slidingly abuts the seal carrier (10) when the internal diameter is changed.

4. The pipe connection device according to one of claims 1 to 3, **characterised**
- **in that** the seal carrier (10) is coupled in the radial direction (11), in particular positively, to the tensioning body (3) and remains immobile relative to the tensioning body (3) when the internal diameter of the clamping ring (6) is changed.

5. The pipe connection device according to one of claims 1 to 4, **characterised in that** the position of the sleeve portion (9) of the seal and the position of the tensioning body (3) relative to the tensioning body (3) remain unchanged when the inner diameter of the clamping ring (6) is changed.

6. The pipe connection device according to one of claims 1 to 5, **characterised**
- **in that** the seal carrier (10) and the sleeve (1) are positively coupled to one another via a clearance (12) and a protrusion (14) projecting in the axial direction (13) into the clearance (12),
- in particular, in that the protrusion (14) is provided on the seal carrier (10) and the clearance (12) is provided on the sleeve (1).

7. The pipe connection device according to claim 6, **characterised**
- **in that** the protrusion (14) is designed to be annularly circumferential,
- and **in that** the clearance (12) is an annular groove.

8. The pipe connection device according to claim 6 or 7, **characterised**
- **in that** the seal (7) extends between the protrusion (14) and the clearance (12),
- and/or in that the seal (7) extends into the region between the protrusion (14) and the clearance (12),
- and/or in that the seal (7) completely fills the region between the protrusion (14) and the clearance (12).

9. The pipe connection device according to one of claims 1 to 8, **characterised in that** the seal (7) is arranged with a pipe portion (15) on the inside of the clamping ring (6) in order to seal the gap between the clamping ring (6) and the pipe when the pipe end (2) is inserted.

10. The pipe connection device according to claim 9, **characterised in that** the pipe portion (15) of the seal is designed in such a way that it abuts the pipe end (2) at least along a continuous circumferential line, in particular along an annular uninterrupted surface.

11. The pipe connection device according to claim 9 or 10, **characterised in that** the seal (7) comprises a connecting portion (16) via which the sleeve portion (9) and the pipe portion (15) of the seal are sealingly connected to each other,
- in particular, **in that** the connecting portion (16), the sleeve portion (9) and the pipe portion (15) of the seal are integrally formed.

12. The pipe connection device according to claim 11, **characterised**
- **in that** the connecting portion (16) of the seal (7) is designed in such a way that it allows the pipe portion (15) to move in the axial direction, in particular in the direction of extraction of the pipe, with respect to the sleeve portion (9) while maintaining the sealing effect,
- and/or in that the connecting portion (16) is formed as an annular gusset portion.

13. The pipe connection device according to one of claims 1 to 12, **characterised in that** the seal carrier (10) is formed of several parts and comprises several segments which, when assembled, form a smooth, substantially continuous side facing towards the sleeve portion (9) of the seal.

14. The pipe connection device according to one of claims 1 to 13, **characterised in that** the clamping ring (6) comprises several securing wedges (8) arranged on the links (5) so as to be displaceable along the direction of extraction for securing the pipe end (2) against extraction.

## Revendications

1. Dispositif de raccordement de tuyaux pour former un raccord de tuyaux étanche et résistant à l'arrachement, comprenant :
- un manchon (1) pour recevoir une extrémité de tuyau (2),
- un corps de serrage (3), qui est réalisé en particulier sous forme annulaire,
- au moins un moyen de serrage (4), en particulier plusieurs vis réparties le long du corps de serrage (3),
- une bague de serrage (6) composée de plusieurs maillons (5) disposés de manière mobile les uns par rapport aux autres et ayant un diamètre intérieur réglable,
- un joint d'étanchéité (7) pour assurer l'étanchéité du raccord de tuyaux,
- et éventuellement plusieurs cales de sécurité (8) disposées sur les maillons (5) de manière à pouvoir être déplacées le long de la direction d'extraction par l'intermédiaire d'un dispositif de guidage (17), pour assurer la sécurité d'extraction de l'extrémité de tuyau (2),
- la bague de serrage (6) étant conçue de telle sorte qu'elle est serrée entre le manchon (1) et le corps de serrage (3) et pressée en direction de l'extrémité de tuyau (2) par le serrage ou la fixation du moyen de serrage (4),
- le joint d'étanchéité (7) s'étendant avec une section de manchon (9) en forme d'anneau entre le manchon (1) et la bague de serrage (6) pour rendre cette zone étanche,
**caractérisé en ce,**
- en ce qu'un support de joint d'étanchéité (10) de forme annulaire est prévu entre le joint d'étanchéité (7) et la bague de serrage (6).

2. Dispositif de raccordement de tuyaux selon la revendication 1, **caractérisé en ce que** le joint d'étanchéité (7) est en appui contre le support de joint d'étanchéité (10) et/ou au manchon (1) au moins le long d'une ligne périphérique continue, en particulier le long d'une surface annulaire sans interruption.

3. Dispositif de raccordement de tuyaux selon la revendication 1 ou 2, **caractérisé en ce que** la bague de serrage (6) s'applique de manière coulissante contre le support de joint d'étanchéité (10) lors d'une modification du diamètre intérieur.

4. Dispositif de raccordement de tuyaux selon l'une des revendications 1 à 3, **caractérisé**
- **en ce que** le support de joint d'étanchéité (10) est couplé au corps de serrage (3) dans la direction radiale (11), notamment par complémentarité de forme, et reste immobile par rapport au corps de serrage (3) lors d'une modification du diamètre intérieur de la bague de serrage (6).

5. Dispositif de raccordement de tuyaux selon l'une quelconque des revendications 1 à 4, **caractérisé en ce que** la position de la section de manchon (9) du joint et la position du corps de serrage (3) par rapport au corps de serrage (3) restent inchangées en cas de modification du diamètre intérieur de la bague de serrage (6).

6. Dispositif de raccordement de tuyaux selon l'une des revendications 1 à 5, **caractérisé**
- **en ce que** le support de joint d'étanchéité (10) et le manchon (1) sont couplés l'un à l'autre par complémentarité de forme par l'intermédiaire d'un dégagement (12) et d'un prolongement (14) faisant saillie dans la direction axial (13) dans le dégagement (12),
- en particulier en ce que le prolongement (14) est prévu sur le support de joint d'étanchéité (10) et le dégagement (12) sur le manchon (1).

7. Dispositif de raccordement de tuyaux selon la revendication 6, **caractérisé**
- **en ce que** le prolongement (14) est réalisé de manière périphérique en forme d'anneau,
- et **en ce que** le dégagement (12) est une rainure annulaire.

8. Dispositif de raccordement de tuyaux selon la revendication 6 ou 7, **caractérisé**
- **en ce que** le joint d'étanchéité (7) s'étend entre le prolongement (14) et le dégagement (12),
- et/ou en ce que le joint d'étanchéité (7) s'étend dans la zone entre le prolongement (14) et le dégagement (12),
- et/ou en ce que le joint d'étanchéité (7) remplit complètement la zone entre le prolongement (14) et le dégagement (12).

9. Dispositif de raccordement de tuyaux selon l'une des revendications 1 à 8, **caractérisé en ce que** le joint d'étanchéité (7) est disposé avec une section tubulaire (15) sur le côté intérieur de la bague de serrage (6) pour, lorsque l'extrémité de tuyau (2) est insérée, rendre étanche l'espace entre la bague de serrage (6) et le tuyau.

10. Dispositif de raccordement de tuyaux selon la revendication 9, **caractérisé en ce que** la section tubulaire (15) du joint d'étanchéité est conçue de telle sorte qu'elle s'applique contre l'extrémité de tuyau (2) au moins le long d'une ligne périphérique continue, en particulier le long d'une surface annulaire sans interruption.

11. Dispositif de raccordement de tuyaux selon la revendication 9 ou 10, **caractérisé en ce que** le joint d'étanchéité (7) comprend une section de raccordement (16) par laquelle la section de manchon (9) et la section tubulaire (15) du joint d'étanchéité sont reliées entre elles de manière étanche,
- en particulier **en ce que** la section de raccordement (16), la section de manchon (9) et la section tubulaire (15) du joint d'étanchéité sont formées d'une seule pièce.

12. Dispositif de raccordement de tuyaux selon la revendication 11, **caractérisé**
- **en ce que** la section de raccordement (16) du joint d'étanchéité (7) est conçue de telle sorte qu'elle permet un mouvement de la section tubulaire (15) dans la direction axiale, en particulier dans la direction d'extraction du tuyau, par rapport à la section de manchon (9) tout en conservant l'effet d'étanchéité,
- et/ou en ce que la section de raccordement (16) est conçue comme une section plissée annulaire.

13. Dispositif de raccordement de tuyaux selon l'une des revendications 1 à 12, **caractérisé en ce que** le support de joint d'étanchéité (10) est réalisé en plusieurs parties et comprend plusieurs segments qui, une fois assemblés, forment une face lisse, essentiellement continue et orientée vers la section de manchon (9) du joint d'étanchéité.

14. Dispositif de raccordement de tuyaux selon l'une des revendications 1 à 13, **caractérisé en ce que** la bague de serrage (6) comprend plusieurs cales de sécurité (8) disposées sur les maillons (5) de manière à pouvoir être déplacées le long de la direction d'extraction pour bloquer l'extraction de l'extrémité de tuyau (2).
